# EUROPÄISCHE PATENTSCHRIFT

(11) **EP 0 921 618 B1**
(45) Veröffentlichungstag und Bekanntmachung des Hinweises auf die Patenterteilung: **25.06.2003**
(21) Anmeldenummer: 98122071.8
(22) Anmeldetag: 20.11.1998
(51) Int. Cl.: H02H 3/08, H02H 6/00

(54) **Schaltungsanordnung zur Ansteuerung einer elektrischen Antriebseinheit**
Circuit for controlling an electrical drive unit
Circuit de commande d'un équipement électrique d'un entrainement

(30) Priorität: 05.12.1997 DE 19754126
(43) Veröffentlichungstag der Anmeldung: 09.06.1999
(73) Patentinhaber: Infineon Technologies AG, 81669 München (DE)
(72) Erfinder: Feldtkeller, Martin, 81543 München (DE)
(74) Vertreter: Patentanwälte Westphal, Mussgnug & Partner

(56) Entgegenhaltungen:
- EP-A- 0 106 255
- DE-A- 2 549 850
- DE-A- 2 600 472
- US-A- 5 450 727
- PATENT ABSTRACTS OF JAPAN vol. 1996, no. 01, 31. Januar 1996 (1996-01-31) & JP 07 234162 A (TOSHIBA CORP), 5. September 1995 (1995-09-05)

## Beschreibung

Die Erfindung betrifft eine Schaltungsanordnung zum Ansteuern einer elektrischen Antriebseinheit in einem Kraftfahrzeug mit einer Gleichspannungsquelle und mit einer Steuerschaltung in Form einer Strombrücke und eines Brückentreibers zur Spannungskommutierung, die sich zwischen der Gleichspannungsquelle und der elektrischen Antriebseinheit befindet.

Im Bereich der Kraftfahrzeugelektronik sind solche Schaltungsanordnungen mit Steuerschaltungen, die der Spannungskommuntierung dienen, bekannt. Sie bestehen z.B. aus einer mit MOSFETs aufgebauten Strombrücke. Die MOSFETs werden von einem Brückentreiber in geeigneter Weise angesprochen, so daß ein an der Strombrücke angeschlossener Gleichstrommotor in seiner Drehrichtung umgekehrt werden kann. Aufgrund der Erwärmung der Leistungsschalter, bedingt durch hohe Motorströme, zum einen durch ohmsche Durchlaßverluste, zum anderen durch Schaltverluste bei getaktetem Betrieb, muß sichergestellt werden, daß nicht durch einen Dauerbetrieb die Leistungsschalter überhitzt werden, da eine Zerstörung die Folge sein könnte. Aus diesem Grunde ist eine Überwachung der Temperatur der Leistungsschalter erforderlich.

Es sind verschiedene Möglichkeiten einer Realisierung einer Temperaturüberwachungsschaltung bekannt.

Auf monolithisch integrierten Schaltungen liegt eine enge thermische Kopplung zwischen Brückentreiber und der Brückenschaltung vor. Es ist deshalb ausreichend, auf dem Brückentreiber einen Temperatursensor anzubringen, der dann näherungsweise die Temperatur der Leistungsschalter wiedergibt. Monolithisch integrierte Schaltungen können jedoch nur bis maximal 10 A realisiert werden. Für viele Anwendungen ist dieser Strom nicht ausreichend.

Bei einer diskreten Realisierung der Brückenschaltung kann auf jedem Leistungsschalter ein Temperatursensor angebracht werden. Es existieren Verfahren zur Temperaturüberwachung z. B. mittels einer sogenannten Chip-on-Chip-Montage eines Temperatursensors auf einem Leistungstransistor oder intelligente Leistungstransistoren mit einer integrierten Temperaturerfassung. Ein Nachteil ist jedoch die meist nur digitale Auswertung, die darüber Aufschluß gibt, ob eine Grenzwerttemperatur erreicht wird oder nicht. Ein mögliches und sofortiges Einstellen seiner Funktion bei thermischer Überlastung kann die Folge sein. Dies ist in der Regel jedoch nicht erwünscht. Diese Lösung ist zudem aufwendig und teuer.

Aus der EP 0 578 958 B1 ist eine Überlastungsschutzschaltung für einen Transistor bekannt. Die Erfindung beruht auf der Erkenntnis, daß im Regelbetrieb der Strom über dem Transistor konstant ist und damit die Verlustleistung proportional zum Spannungsabfall über dem Transistor ist. wenn dieser Spannungsabfall einem Integrator zugeführt wird, dessen Zeitkonstante auf die thermische Zeitkonstante des Transistors abgestimmt ist, ist die Spannung am Integrator ein Maß für die Verlustenergie bzw. die Temperatur des Transistors. Die Integratorspannung wird mit einem Referenzwert verglichen und bei Überschreiten dieses Referenzwertes z. B. als Abschaltkriterium für den Transistor herangezogen. Eine Temperaturüberwachung nach dieser Methode bedingt eine Überwachung eines jeden Transistors. Dies ist aufwendig und teuer.

Die US 5,450,727 beschreibt eine Ansteuerschaltung für ein thermoelektrisches Kühlelement, wobei ein an das thermoelektrische Kühlelement gekoppelter Temperatursensor und eine Stromregelschaltung vorhanden sind, um die Temperatur des thermoelektrischen Kühlelementes auf einen sollwert zu regeln.

Der Erfindung liegt deshalb die Aufgabe zugrunde, eine Schaltungsanordnung der beschriebenen Art so weiter zu entwickeln, so daß die Temperatur der Leistungsschalter einer Steuerschaltung für einen elektrischen Antrieb einfach und mit geringem Aufwand auch für hohe Nennströme zuverlässig überwacht werden kann.

Diese Aufgabe wird durch die Merkmale des Patentanspruchs 1 gelöst.

Weiterbildungen der Erfindung sind Gegenstand der Unteransprüche.

Die erfindungsgemäße Schaltungsanordnung besitzt eine Temperaturauswertung, die den durch die elektrische Antriebseinheit fließenden Strom zur Ermittlung der absoluten Temperatur des am höchsten belasteten Leistungsschalters der Steuerschaltung heranzieht. Gemäß der Erfindung wird die aus dem Quadrat des Motorstromwerts gebildete Größe mit Hilfe eines RC-Filters aufintegriert, dessen Zeitkonstante gleich der thermischen Abkühlzeitkonstante der Brückenschaltung ist. Der Spannungsverlauf am Ausgang des RC-Filters entspricht dann näherungsweise dem Verlauf der Gehäusetemperatur des am stärksten belasteten Leistungsschalters. Für ein absolutes Maß der höchsten Gehäusetemperatur eines der Leistungsschalter der Brückenschaltung wird vor oder nach dem RC-Filter ein von der Temperatur der Treiberschaltung abgeleitetes Signal hinzu addiert. Das Signal entspricht näherungsweise der Umgebungstemperatur. Das auf diese Weise ermittelte Signal kann bei Überschreiten einer ersten voreingestellten Grenzwerttemperatur dazu dienen, alle Funktionen auf ein minimal erforderliches Maß zu reduzieren, um Verlustleistung zu sparen. Bei Überschreiten einer zweiten voreingestellten Grenzwerttemperatur kann die Brückenschaltung beispielsweise vollständig abgeschaltet werden. Bei einer thermischen Kopplung zwischen Leistungsschaltern und Brückentreiber und Addition der Signale nach dem RC-Filter, muß das RC-Filter entsprechend der Laufzeit der thermischen Kopplung von Leistungsschaltern und Brückentreiber dimensioniert werden.

Ein Vorteil der erfindungsgemäßen Schaltungsanordnung ist es, daß zur Temperaturermittlung der Leistungsschalter nicht alle Leistungsschalter der Brückenschaltung überwacht werden müssen, sondern daß es ausreichend ist, den Motorstrom als Signal für die Temperaturauswertung heranzuziehen. Da der Motorstrom aus regelungstechnischen Gründen ohnehin erfaßt wird, ist eine kostengünstige Realisierung der Temperaturauswertung möglich.

Kennzeichnend für die Schaltungsanordnung zum Ansteuern einer elektrischen Antriebseinheit mit einer Temperaturauswerteschaltung zum Ermitteln der Temperatur des am höchsten belasteten Leistungsschalters ist es, daß anstatt der Verwendung eines oder mehrerer Temperatursensoren ein RC-Filter zum Einsatz kommt, dessen Zeitkonstante gleich der thermischen Abkühlzeitkonstante der Steuerschaltung ist. Das am Ausgang des RC-Filters anliegende Signal ist ein Maß für den Temperaturverlauf für die Gehäusetemperatur der am stärksten belasteten Leistungsschalters. Vorteilhaft bei der Verwendung eines RC-Filters gegenüber einem Temperatursensor sind die geringen Kosten.

Ein weiterer Vorteil der erfindungsgemäßen Temperaturauswerteschaltung besteht darin, daß der Aufwand für die Temperaturauswertung unabhängig von der Anzahl der verwendeten Leistungsschalter ist. Besteht die Strombrücke aus sechs Leistungsschaltern anstatt vier Leistungsschaltern, so kann anstatt eines Gleichstrommotors ein Asynchronmotor verwendet werden. Ein Asynchronmotor bringt Kosten- und Gewichtsvorteile. Zur korrekten Motorstromerfassung muß in diesem Fall in jedem Strompfad eine Motorstrom-Erfassungseinrichtung installiert werden, wobei jeder Stromwert quadriert wird und die Summe der Quadrate als Maß für die Verlustleistung verwendet wird, die einem RC-Filter zugeführt wird.

Sofern der Motorstrom einen Strom von 10 A nicht übersteigt, kann die Steuerschaltung als monolithisch integrierte schaltung ausgeführt werden. Eine monolithisch integrierte Schaltung bringt Platz- und Kostenvorteile gegenüber einer diskret aufgebauten Schaltung mit sich.

Es ist unter Berücksichtigung, daß sich die Antriebseinheit normalerweise dreht und deshalb im zeitlichen Mittel alle Halbbrücken der Brückenschaltung gleich stark belastet werden, denkbar, daß auch die Erfassung und Auswertung eines Strompfades mit einer Motorstrom-Erfassungseinrichtung ausreicht, um damit ein Maß für die Erwärmung der gesamten Brükkenschaltung zu erhalten.

Die Gleichspannungsquelle der Schaltungsanordnung zum Ansteuern einer elektrischen Antriebseinheit kann aus einer Batterie, einem Akkumulator oder zumindest einer Solarzelle bestehen. Es ist auch eine Wechselspannungsquelle mit nachgeschaltetem Gleichrichter denkbar. Vorteil der zur Verfügung stehenden Wahlmöglichkeiten ist es, daß je nach Randbedingung eine geeignete oder gerade vorhandene Spannungsversorgung genutzt werden kann.

Ein weiterer Vorteil der erfindungsgemäßen Schaltungsanordnung besteht darin, daß die Temperaturauswerteschaltung als monolithisch integrierte Schaltung ausgeführt werden kann. Da der Brückentreiber - unabhängig von der Realisierung der Steuerschaltung als monolithisch integrierte Schaltung oder als diskret aufgebaute Schaltung - immer in integrierter Form vorliegt, kann die Temperaturauswerteschaltung auf der integrierten Schaltung des Brückentreibers mit integriert werden. Diese Ausführung ist kostengünstig und platzsparend. Allein der RC-Filter wird nicht mit auf dieser Schaltung integriert, sondern diskret ausgeführt.

In einer vorteilhaften Ausgestaltung wird die Erfassung des Motorstroms mittels Widerständen, die in den Brückenzweigen der Strombrücke angeordnet sind, mittels Verstärker, einem Flipflop und einem Umschalter massebezogen durchgeführt. Der Vorteil besteht darin, daß die Motorstromerfassung als integrierte Schaltung ausgeführt werden kann. Diese kann dann z.B. zusammen mit der Temperaturauswerteschaltung und dem Brückentreiber ausgeführt werden. Dies bringt Kosten- und Platzvorteile.

Die Erfindung wird anhand zweier Ausführungsbeispiele in Verbindung mit den Figuren 1 bis 4 näher erläutert.

Es zeigen:
- Figur 1: ein Prinzipschaltbild der Erfindung mit einem Gleichstrommotor,
- Figur 2: ein Prinzipschaltbild der Erfindung mit einem Asynchronmotor und Motorstrom-Erfassungseinrichtungen in jedem Strompfad,
- Figur 3: ein Prinzipschaltbild der Erfindung mit einem Asynchronmotor und einer Motorstrom-Erfassungseinrichtung und
- Figur 4: eine vorteilhafte Ausgestaltung der Motorstromerfassung für eine Anordnung mit Gleichstrommotor.

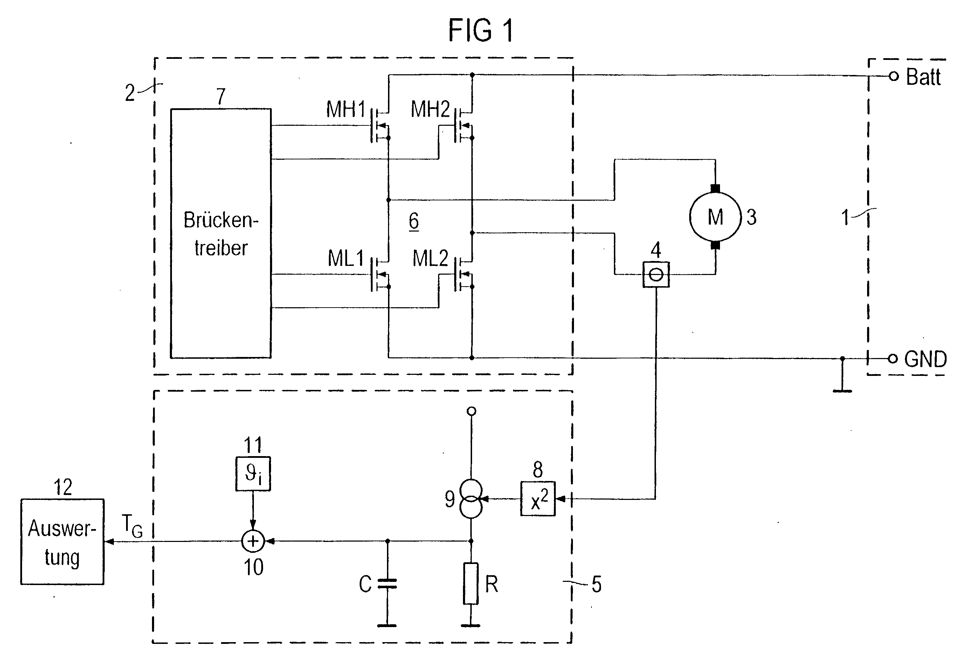

Figur 1 zeigt eine Schaltungsanordnung zum Ansteuern einer elektrischen Antriebseinheit 3 mit einer Spannungsquelle 1 und mit einer Steuerschaltung 2 zur Spannungskommutierung, die aus einer Strombrücke 6 und einem Brückentreiber 7 beseht. Die Steuerschaltung 2 befindet sich zwischen der Spannungsquelle 1 und der elektrischen Antriebseinheit 3. Weiterhin besteht die Schaltungsanordnung aus einer Motorstrom-Erfassungeinrichtung 4, die nach Figur 1 zwischen einem Anschluß der elektrischen Antriebseinheit 3 und einem Symmetriepunkt zweier Leistungsschalter der Strombrücke 6 liegt. Der Motorstromwert wird einer Temperaturauswerteschaltung 5 zugeführt. Die Leistungsschalter der Strombrücke 6 bestehen in Figur 1 aus vier MOSFETs MH1, MH2, C1, C2. Die Leistungsschalter können jedoch auch Bipolartransistoren oder andere Leistungsschalter sein. Die Spannungsquelle 1 in Figur 1 ist eine Gleichspannungsquelle in Form einer Batterie mit einem Pluspol und einem Minuspol, sie kann jeodoch auch ein Akkumulator, mindestens eine Solarzelle oder eine Wechselspannungsquelle mit nachgeschaltetem Gleichrichter sein. Die elektrische Antriebseinheit 3 ist in Figur 1 ein Gleichstrommotor. Der Pluspol der Spannungsquelle 1 ist mit dem Drainanschluß eines ersten MOSFETs MH1 und dem Drainanschluß eines zweiten MOSFETs MH2 verbunden. Der Sourceanschluß des ersten MOSFET MH1 ist mit einem Anschluß der elektrischen Antriebseinheit 3 und dem Drainanschluß eines dritten MOSFETs ML1 verbunden. Der Sourceanschluß des zweiten MOSFET MH2 ist mit dem anderen Anschluß der elektrischen Antriebseinheit 3 und dem Drainanschluß eines vierten MOSFET ML2 verbunden. Der Sourceanschluß des dritten MOSFET ML1 und der Sourceanschluß des vierten MOSFET ML2 sind an den Minuspol der Spannungsquelle 1 angeschlossen. Die Gateanschlüsse des ersten, des zweiten, des dritten und des vierten MOSFETs MH1, MH2, ML1, ML2 sind mit einem Brückentreiber 7 verbunden. Zwischen dem Sourceanschluß des vierten MOSFET ML2 und dem Anschluß der elektrischen Antriebseinheit 3 ist eine Motorstrom-Erfassungseinrichtung 4 angebracht.

Der Ausgang der Motorstrom-Erfassungseinrichtung 4 ist mit dem Eingang eines Quadrierers 8 verbunden. Der Ausgang des Quadrierers 8 dient als Eingang für eine gesteuerte Stromquelle 9. Der Ausgang der gesteuerten Stromquelle 9 ist mit einem Widerstand R und einer Kapazität C verbunden. Der Widerstand R und die Kapazität C bilden ein Integrierglied, dessen Ausgang einen Summand eines Addierers 10 bildet. Den zweiten Summand bildet eine Temperaturmeßeinrichtung 11, die in enger thermischer Kopplung zum Brückentreiber 7 der Steuerschaltung 2 steht. Der Ausgang des Addierers 10 ist z. B. mit einer Auswerteschaltung 12 verbunden und stellt dessen Eingangssignal dar. Die Auswerteschaltung 12 ist nicht weiter ausgeführt.

Die Spannungsquelle 1 stellt eine Betriebsspannung zur Verfügung, mit der die Strombrücke 6, die aus dem ersten, dem zweiten, dem dritten und dem vierten MOSFET MH1, MH2, ML1, ML2 besteht, betrieben wird. Die Steuerschaltung 2 kann dabei als monolithisch integrierte Schaltung ausgeführt sein, die den Brückentreiber 7 und die Strombrücke 6 enthält. Bei Nennströmen größer als 10 A ist jedoch ein diskreter Aufbau der Leistungsschalter der Strombrücke 6 vorgesehen. Der Brückentreiber 7 steuert die Gates der Leistungsschalter der Strombrücke 6 so an, daß die elektrische Antriebseinheit 3 in ihrer Drehrichtung umgekehrt werden kann. Die elektrische Antriebseinheit 3 wird mit einer definierten Nennspannung betrieben. Durch sie und damit auch durch die Strombrücke 6 fließt der gleiche Strom. Dieser Strom wird von der Motorstrom-Erfassungseinrichtung 4 aufgenommen und dem Quadrierer 8 zugeführt. Da die Verlustleistung proportional zum quadrierten Strom ist, und der zur Verlustleistung proportionale Temperaturverlauf am Ausgang des Integrierers (RC-Filter) zur Verfügung steht, legen die gesteuerte Stromquelle 9 und der RC-Filter den Proportionalitätsfaktor fest. Die Zeitkonstante des RC-Filters wird dabei an die thermische Abkühlzeitkonstante der Strombrücke angeglichen. Die Temperaturmesseinrichtung 11 ist beispielsweise auf dem Brückentreiber 7 angebracht und liefert ein Temperatursignal, das annähernd der Umgebungstemperatur entspricht. Durch Addition dieses Signals, das ungefähr der Temperatur des Brückentreibers entspricht, mit der am Ausgang des RC-Filters zur Verfügung stehenden Spannung, wird ein absolutes Maß für das am höchsten belastete Gehäuse der Leistungsschalter der Strombrücke 6 gewonnen. Dieses Signal kann einer Auswerteschaltung 12 zugeführt werden, die beispielsweise die Funktionen der Strombrücke 6 reduziert oder aber bei Überschreiten einer voreingestellten Schwelle die Strombrücke 6 vollständig abschaltet.

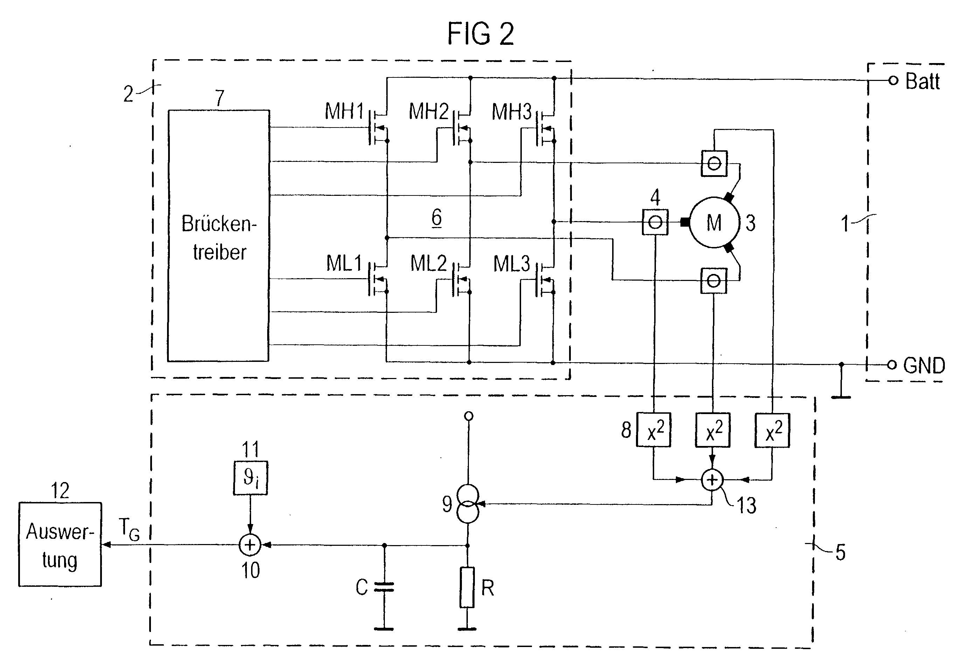

Figur 2 zeigt ein Ausführungsbeispiel, in dem die elektrische Antriebseinheit 3 ein Asynchronmotor ist. Der Unterschied zum Ausführungsbeispiel nach Figur 1 besteht darin, daß parallel zu der vorhandenen Strombrücke 6 zwei weitere Leistungsschalter MH3, ML3 dazugeschaltet werden. Die Gateanschlüsse der Leistungsschalter MH3, ML3 sind ebenfalls mit dem Brückentreiber 7 verbunden. Der Brückentreiber 7 steuert die Leistungsschalter der Strombrücke 6 so an, daß um jeweils 120° phasenverschobene Spannungen folgerichtig an den drei Anschlüssen des Asynchronmotors anliegen. In jedem dieser drei Anschlüsse des Asynchronmotors ist eine Motorstrom-Erfassungseinrichtung 4 angebracht. Die Motorstromwerte werden jeweils mittels eines Quadrierers 8 quadriert und die Summe der Quadrate der Temperaturauswerteschaltung 5 zuführt.

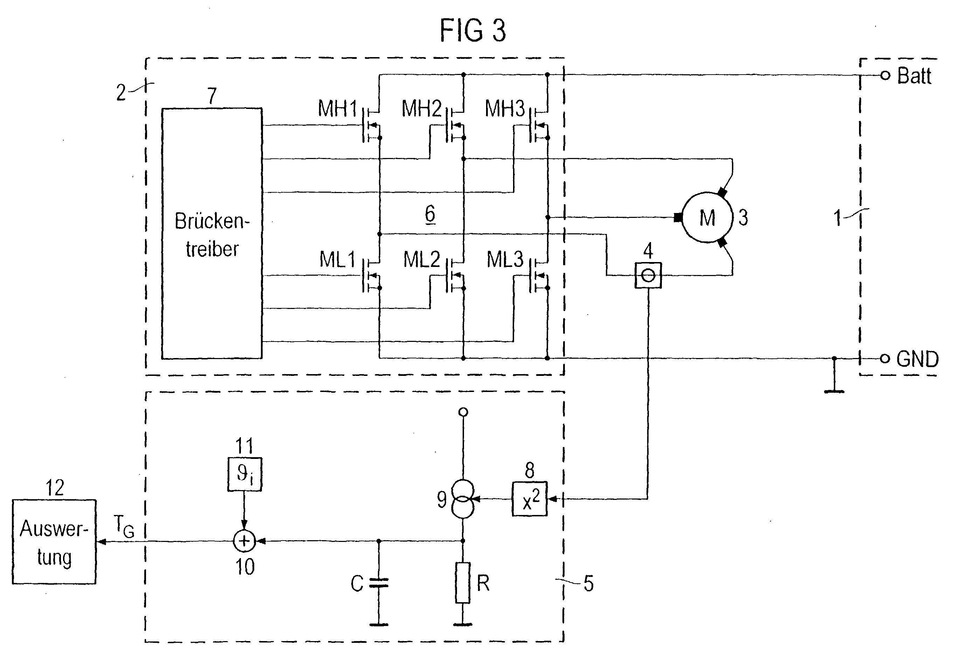

Eine vorteilhafte Ausgestaltung einer Motorstrom-Erfassung zeigt Figur 3. Da sich die elektrische Antriebseinheit 3 im Betrieb dreht, sind im zeitlichen Mittel alle Halbbrücken der Strombrücke 6 gleich stark belastet. Deshalb ist es ausreichend, eine Motorstrom-Erfassungeinrichtung 4 in einem der drei Strompfade zu installieren und den Motorstromwert zu erfassen. Dieser Motorstromwert wird der Temperaturauswerteschaltung 5 zugeführt und das das von der Temperatur der Strombrücke 6 abhängige Ausgangssignal T_{G} einer nicht näher ausgeführten Auswerteschaltung 12 zugeführt.

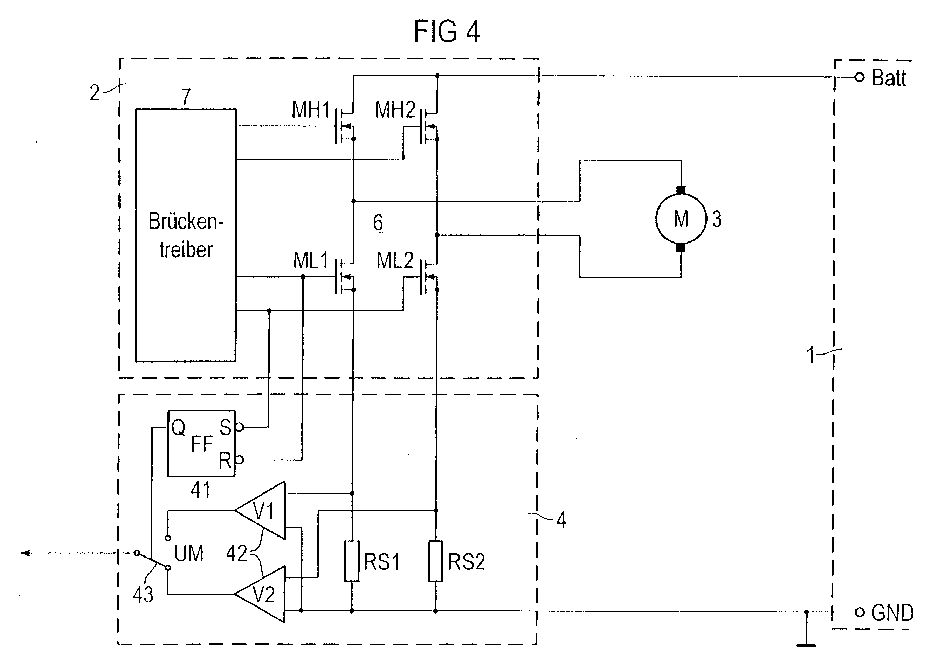

Figur 4 zeigt eine besonders vorteilhafte Erfassung des Motorstroms anhand des Prinzipschaltbildes der Erfindung mit einem Gleichstrommotor, die in Form einer monolithisch integrierten Schaltung ausgeführt sein kann (Figur 1). Die Strommessung erfolgt massebezogen mit Hilfe der Widerstände RS1 und RS2, sowie der Verstärker V1 und V2. Das Signal am Wechsler des Umschalters 43 ist ein Abbild des Motorstromes. Der Freilauf bei getaktetem Betrieb sowie bei Bremsbetrieb des Motors, erfolgen über den dritten und vierten MOSFET ML1, ML2. Der Sourceanschluß des dritten MOSFET ML1 ist dabei mit einem Eingang des Verstärkers V1 und dem Widerstand RS1 verbunden. Der zweite Eingang des Verstärkers V1 ist mit dem Minuspol der Spannungsquelle 1 verbunden. Der Sourceanschluß des vierten MOSFET ist mit einem Eingang des zweiten Verstärkers V2 und mit dem Widerstand RS2 verbunden. Der zweite Eingang des Verstärkers V2 ist mit dem Minuspol der Spannungsquelle 1 verbunden, ebenso wie die beiden anderen Anschlüsse der Widerstände RS1 und RS2 mit dem Minuspol verbunden sind. Die Ausgänge der Verstärker V1 und V2 sind jeweils mit einem Kontakt eines Umschalters 43 verbunden. Die Stellung des Umschalters 43 wird durch den Ausgang eines Flip-Flops 41 festgelegt. Der R-Eingang des Flip-Flops 41 ist mit dem Gateanschluß des dritten MOSFET ML1 verbunden, während der S-Anschluß des Flip-Flops 41 mit dem Gateanschluß des vierten MOSFET ML2 verbunden ist. Das am Wechsler des Umschalters 43 anliegende Signal, ist ein Abbild des Motorstromes. Dieser wird der erfindungsgemäßen Temperaturauswertung 5 zugeführt.

Allen Ausführungsbeispielen ist gemeinsam, daß die Funktionen der des Quadrierers 8, der gesteuerten Stromquelle 9, des Addierers 10 sowie die Temperaturerfassung 11 des Treibers 7 in einer vorteilhaften Gestaltung als monolithisch integrierte Schaltung ausgeführt sein können.

Es ist ebenso denkbar, daß der Motorstromwert einem z.B. softwaregesteuertem Rechner zugeführt wird, der dann eine Quadrierung des Motorstromwertes, eine Integration der quadrierten Größe sowie eine Addition einer von der Umgebungstemperatur abhängigen Größe zum Integral vornimmt, und das temperaturabhängige Ausgangssignal einer Auswerteschaltung zur Weiterverarbeitung zuführt.

## Patentansprüche

1. Schaltungsanordnung zum Ansteuern einer elektrischen Antriebseinheit (3) mit einer Steuerschaltung (2), die eine Strombrücke (6) und einen Brückentreibers (7) aufweist, über die der elektrischen Antriebseinheit (3) Strom zugeführt wird, sowie mit einer Temperaturauswerteschaltung (5),
**dadurch gekennzeichnet, daß** die Temperaturauswerteschaltung (5) ein von der Temperatur der Strombrücke (6) abhängiges Ausgangssignal aus dem der elektrischen Antriebseinheit (3) zugeführten Strom ermittelt.

2. Schaltungsanordnung nach Anspruch 1,
**dadurch gekennzeichnet, daß** ein Motorstromwert der elektrischen Antriebseinheit (3) der Temperaturauswerteschaltung zugeführt wird und das temperaturabhängige Ausgangssignal durch Quadrieren des Motorstromwertes, Integrieren des Motorstromquadrats mittels eines RC-Filters (R,C), wobei die Zeitkonstante des RC-Filters (R,C) gleich der thermischen Abkühl-Zeitkonstante der Steuerschaltung ist und Addieren einer von der Umgebungstemperatur abhängigen Größe zum Integral gebildet wird.

3. Steuerschaltung nach Anspruch 1 und 2,
**dadurch gekennzeichnet, daß** die Steuerschaltung (2) aus n Strombrücken (6) und einem Treiber (7) zur Ansteuerung der n Strombrücken (6) besteht.

4. Steuerschaltung nach den Ansprüchen 1 bis 3,
**dadurch gekennzeichnet, daß** die Steuerschaltung (2) als monolithisch integrierte Schaltung ausgeführt ist.

5. Steuerschaltung nach den Ansprüchen 1 bis 4,
**dadurch gekennzeichnet, daß** für die elektrische Antriebseinheit (3) ein Gleichstrommotor oder ein Asynchronmotor vorgesehen ist.

6. Schaltungsanordnung nach den Ansprüchen 1 bis 5,
**dadurch gekennzeichnet, daß** der Brückentreiber (7) die Temperaturmeßeinrichtung (11) aufweist.

7. Schaltungsanordnung nach den Ansprüchen 1 bis 6,
**dadurch gekennzeichnet, daß** die Temperaturauswerteschaltung(5) als monolithisch integrierte Schaltung ausgeführt ist.

8. Schaltungsanordnung zum Erfassen des Motorstromes der elektrischen Antriebseinheit (3) nach Anspruch 1,
**dadurch gekennzeichnet, daß** der Motorstromwert durch eine Motorstrom-Erfassungseinrichtung mittels Widerständen (RS1, RS2) bstimmt wird, die in Brückenzweigen der Strombrücke (6) angeordnet sind.

9. Verfahren zum Temperaturüberwachen von Leistungsschaltern einer Strombrücke zum Ansteuern einer elektrischen Antriebseinheit, **gekennzeichnet durch**:
- Erfassen eines Motorstromwertes der elektrischen Antriebseinheit
- Quadrieren des Motorstromwertes
- Integrieren des quadrierten Motorstromwertes
- Addieren einer von der Umgebungstemperatur abhängigen Größe zum Integral

## Claims

1. Circuitry for controlling an electric drive unit (3) having a control circuit (2) comprising a current bridge (6) and a bridge driver (7), via which current is supplied to the electric drive unit (3), and also having a temperature evaluation circuit (5),
**characterised in that** the temperature evaluation circuit (5) determines an output signal dependent on the temperature of the current bridge (6) from the current supplied to the electric drive unit (3).

2. Circuitry according to Claim 1,
**characterised in that** a motor current value of the electric drive unit (3) is supplied to the temperature evaluation circuit and the temperature-dependent output signal is formed by squaring the motor current value, integrating the motor current square by means of an RC filter (R, C) , with the time constant of the RC filter (R, C) being equal to the thermal cooling time constant of the control circuit, and adding a quantity dependent on the ambient temperature to the integral.

3. A control circuit according to Claim 1 and 2,
**characterised in that** the control circuit (2) consists of n current bridges (6) and a driver (7) for controlling the n current bridges (6).

4. A control circuit according to Claims 1 to 3,
**characterised in that** the control circuit (2) is designed as a monolithically integrated circuit.

5. A control circuit according to Claims 1 to 4,
**characterised in that** a dc motor or an induction motor is provided for the electric drive unit (3).

6. Circuitry according to Claims 1 to 5,
**characterised in that** the bridge driver (7) comprises a temperature measurement instrument (11).

7. Circuitry according to Claims 1 to 6,
**characterised in that** the temperature evaluation circuit (5) is designed as a monolithically integrated circuit.

8. Circuitry for detecting the motor current of the electric drive unit (3) according to Claim 1,
**characterised in that** the motor current value is determined by a motor current detection device by means of resistors (RS1, RS2) which are disposed in bridge branches of the current bridge (6).

9. A method for monitoring the temperature of circuit breakers of a current bridge for controlling an electric drive unit,
**characterised by**:
- detection of a motor current value of the electric drive unit
- squaring of the motor current value
- integration of the squared motor current value
- adding a quantity dependent on the ambient temperature to the integral.

## Revendications

1. Circuit de commande d'une unité électrique d'entraînement (3), comprenant un circuit de commande (2) présentant un pont de courant (6) et un excitateur de pont (7) par l'intermédiaire desquels du courant est amené à l'unité électrique d'entraînement (3), ainsi qu'un circuit d'évaluation de température (5),
**caractérisé en ce que**
le circuit d'évaluation de la température (5) établit un signal de sortie dépendant de la température du pont de courant (6) à partir de l'intensité du courant amené à l'unité électrique d'entraînement (3).

2. Circuit de commande selon la revendication 1,
**caractérisé en ce qu'**
une valeur de l'intensité du courant de l'unité électrique d'entraînement (3) est envoyée au circuit d'évaluation de température et le signal de sortie dépendant de la température est formé par élévation au carré de la valeur de l'intensité de courant du moteur, intégrations de ce carré au moyen d'un filtre à résistance et condensateur (R, C) dont la constante de temps est égale à la constante de temps de refroidissement du circuit de commande, puis addition à cette intégrale d'une grandeur dépendant de la température ambiante.

3. Circuit de commande selon la revendication 1 ou 2,
**caractérisé en ce que**
le circuit de commande (2) est composé de n ponts de courant (6) et d'un excitateur (7) pour commander ces n ponts.

4. Circuit de commande selon l'une des revendications 1 à 3,
**caractérisé en ce que**
le circuit de commande (2) est un circuit monolithique intégré.

5. Circuit de commande selon l'une des revendications 1 à 4,
**caractérisé en ce que**
comme unité électrique d'entraînement (3) il est prévu un moteur asynchrone.

6. Circuit de commande selon l'une des revendications 1 à 5,
**caractérisé en ce que**
l'excitateur de ponts (7) présente un dispositif de mesure de température (11).

7. Circuit de commande selon l'une des revendications 1 à 6,
**caractérisé en ce que**
le dispositif de mesure de température (5) est un circuit monolithique intégré.

8. Circuit de commande pour saisir l'intensité de courant du moteur de l'unité électrique d'entraînement (3) selon la revendication 1,
**caractérisé en ce qu'**
un dispositif de saisie de la valeur de l'intensité de courant du moteur définit cette valeur au moyen de résistances (RS1, RS2) montées sur les branches des ponts de courant (6).

9. Procédé pour surveiller la température de contacteurs de puissance d'un pont de courant servant à commander une unité électrique d'entraînement,
**caractérisé par** les étapes suivantes :
- saisie d'une valeur d'intensité du courant alimentant le moteur de l'unité électrique d'entraînement,
- élévation au carré de cette valeur,
- intégration de la valeur élevée au carré,
- addition à l'intégrale précédente d'une grandeur dépendant de la température ambiante.
